# EUROPÄISCHE PATENTSCHRIFT

(11) **EP 2 165 798 B1**
(45) Veröffentlichungstag und Bekanntmachung des Hinweises auf die Patenterteilung: **21.09.2011**
(21) Anmeldenummer: 09012008.0
(22) Anmeldetag: 22.09.2009
(51) Int. Cl.: B23Q 3/06, B23Q 7/02, B23Q 11/08

(54) **Bearbeitungseinheit mit einer Werkstückwechslereinheit**
Processing unit with a workpiece exchanger unit
Unité de traitement avec une unité de changement de pièces à usiner

(30) Priorität: 23.09.2008 DE 102008048571
(43) Veröffentlichungstag der Anmeldung: 24.03.2010
(73) Patentinhaber: Grob-Werke GmbH & Co. KG, 87719 Mindelheim (DE)
(72) Erfinder: Höbel, Alfred, 87493 Lauben (DE)
(74) Vertreter: Schulz, Manfred

(56) Entgegenhaltungen:
- EP-A1- 0 553 849
- DE-A1- 19 736 252
- DE-C1- 19 623 080
- JP-A- 54 025 581

## Beschreibung

Die Erfindung betrifft eine Bearbeitungseinheit mit einer Werkstückwechseleinheit.

Eine vergleichbare Bearbeitungseinheit ist zum Beispiel aus der deutschen Offenlegungsschrift 100 53 804 bekannt. In diesem Dokument ist ein Werkstückwechsler beschrieben, bei dem eine auf einer Linearachse aufgesetzte Drehachse mit einem Holegreifer und einem Bringegreifer ausgeführt ist und der Werkstückwechsel über die Drehachse durch gleichzeitiges Ein- und Ausschwenken des unbearbeiteten beziehungsweise bearbeiteten Werkstückes erfolgt. Dabei ergreift der Greifer das Werkstück jeweils von oben, das heißt das Werkstück hängt an der Greifvorrichtung. Der Greifer koppelt bei der Absenkbewegung in eine Abdeckung oder Trennwand ein und transportiert so das Werkstück in den oder aus dem Bearbeitungsraum. Der Greifer ist aber während der Bearbeitung aus dem Bearbeitungsraum herauszuziehen, wofür eine Luke oberhalb des Werkstückes vorgesehen ist.

Der Wechselprozess dauert verhältnismäßig lange, da nach Abschluss der Bearbeitung zunächst diese Luke geöffnet werden muss, dann der Greifer abgesenkt wird, das Werkstück ergreift und anhebt. Dann folgt die Rotation, die das Werkstück aus dem Bearbeitungsraum herausbringt und das neue Werkstück einfördert. Das Werkstück ist wiederum dann abzusetzen, freizugeben und dann der Greifer des neuen Werkstückes so weit nach oben zu verfahren, dass die Ladeluke wieder geschlossen werden kann.

Die JP 54 025581 zeigt eine Bearbeitungseinheit mit einer Werkstückwechselheinheit. In der gezeigten Bearbeitungseinheit erfolgt der Werkstückwechsel durch Verschieben des Werkstückträgers. In der gezeigten Bearbeitungseinheit ist keine den Bearbeitungsraum abschließende Abdeckung vorgesehen.

Die DE 196 23 080 C1 zeigt eine Werkzeugmaschine mit einem als Drehwechsler ausgebildeten Palettenwechsler zum Wechseln von Paletten zwischen der Bearbeitungsposition und der Warteposition. Hierbei ist der Palettenwechsler von der in der Bearbeitungsstation befindlichen Palette entkoppelbar und in eine Freigabestellung bewegbar.

Die DE 197 36 252 A1 zeigt einen Palettenwechsler mit mindestens zwei Paletten, die aus einer Übergabeposition in eine Bearbeitungsposition bringbar sind, wobei zumindest die sich in Bearbeitungsstellung befindliche Palette des Palettenwechslers von einer Umfangswandung umgeben ist.

Die DE 20 2004 020 485 U1 zeigt einen Palettenwechsler mit mehr als zwei werkstückaufnahmezz, die durch Abdeckungen in Art einer Drehtür voneinander getrennt sind.

Eingangs beschriebene Bearbeitungseinheiten werden mit hochautomatisierten Bearbeitungslinien eingesetzt. Für eine möglichst hohe Effizienz der Bearbeitungseinheiten muss der wechselprozess des Werkstückes möglichst schnell erfolgen.

Es ist daher Aufgabe der vorliegenden Erfindung, eine Bearbeitungseinheit vorzuschlagen, bei welcher der Werkstückwechselprozess möglichst schnell erfolgt.

Gelöst wird diese Aufgabe durch eine Bearbeitungseinheit gemäß Ansprunch 1.

Im Bearbeitungsraum ist im erfindungsgemäßen Konzept eine auf das Werkzeug wirkende Spannvorrichtung vorgesehen. Diese Spannvorrichtung ist an einer den Bearbeitungsraum überspannenden, sich an einer Drehsäule abstützenden Traverse angeordnet.

Die erfindungsgemäße Bearbeitungseinheit zeichnet sich gegenüber den aus dem Stand der Technik bekannten Vorrichtungen dadurch aus, dass hierdurch die Zeit erspart wird, die bei bekannten Vorrichtungen notwendig ist, um den Werkstückgreifer aus dem Bearbeztungsraum herauszuführen, nachdem das Werkstück abgesetzt und eine Ladeluke verschlossen ist. Dabei fällt dieser Zeitaufwand doppelt an, da für das Entnehmen des Werkstückes aus dem Bearbeitungsraum noch einmal der umgekehrte Ablauf notwendig ist. Durch eine geeignete Ausgestaltung des Werkstückträgers wird dieser platzsparend gleichwohl stabil realisiert und stört auch nicht bei der Bearbeitung, da er unterhalb des Werkstückes verbleibt. Eine mehrseitige Bearbeitung, insbesondere eine Bearbeitung auch von oben, ist gewährleistet. Erfindungsgemäß ist vorgesehen, dass ein Werkstückträger auch mehrere Werkstücke zu tragen vermag, wodurch sich die Effizienz einer erfindungsgemäßen Bearbeitungseinheit noch weiter erhöht. Durch den erfindungsgemäßen Vorschlag wird bereits eine erhebliche Effizienzsteigerung erreicht, da die Bearbeitungspausen während des Werkstückwechsels durch den erfindungsgemäßen Vorschlag erheblich verkürzt werden. Nach einer überschlägigen Abschätzung reduziert sich die Werkstückwechselzeit um ca. 30 % bis 40 %.

Die anhebbar beziehungsweise absenkbar ausgebildeten Werkstückträger erlauben, dass die Werkstückträger das Werkstück an der Vorhaltestelle vor dem Bearbeitungsraum beziehungsweise in der Auflagestelle im Bearbeitungsraum anheben beziehungsweise auf diese absenken und ablegen. Erfindungsgemäß sind eine Mehrzahl von Varianten vorgesehen, wie diese Anheb- beziehungsweise Absenkbewegung der Werkstückträger realisiert wird.

Der erfindungsgemäße Vorschlag, dass der Werkstückträger das Werkstück trägt, also von unten oder vom unteren Bereich her unterstützt, bietet insbesondere den Vorteil, dass für die Verbindung des Werkstückes mit dem Werkstückträger für Transportzwecke kein oder nur sehr wenig Platz am Werkstück benötigt wird. Bei den bekannten Greifkonzepten muss der Greifer von oben her das Werkstück ergreifen und verdeckt damit einen gewissen Bereich des Werkstückes, an welchem eine Bearbeitung daher, selbst wenn der Greifer im Bearbeitungsraum verbleiben würde, nicht möglich ist. Dies schränkt den Einsatzbereich solcher Konzepte erheblich ein. Hiergegen nützt der erfindungsgemäße Vorschlag sowieso die Tatsache aus, dass das Werkstück auf einer Auflage aufliegend bearbeitet wird und in diesem Bereich auch eine Bearbeitung nicht erfolgen kann, weswegen hier auch die Verbindung zwischen dem Werkstück und dem Werkstückträger für Transportzwecke hergestellt wird.

In einer bevorzugten Ausgestaltung der Erfindung ist vorgesehen, dass der Werkstückträger das Werkstück direkt, ohne Tragpalette oder ähnlichem, trägt. Für den Transport der Werkstücke sind oftmals entsprechende Vorrichtungen wie Tragpaletten, Paletten und ähnliches bekannt. Auf den Einsatz solcher Tragpaletten wird bei der erfindungsgemäßen Lösung bewusst verzichtet, da diese für die Durchführung des erfindungsgemäßen Konzeptes nicht notwendig sind. Damit wird aber auch eine sehr kostengünstige Bearbeitung zur Verfügung gestellt, da die Tragpaletten nicht benötigt werden und die entsprechenden Kosten nicht anfallen.

In einer bevorzugten Ausgestaltung der Erfindung ist die Abdeckung um die Drehsäule drehbar gelagert ist. Wie insbesondere in der Zeichnung gezeigt ist, ist die Abdeckung als Schwenktüre vorgesehen, wobei die Drehsäule mittig, symmetrisch an der Abdeckung angeordnet ist, um auf ein Verschwenken der Abdeckung immer einen optimal geschlossenen Zustand zu gewährleisten. Dabei ist die Drehsäule bevorzugt vertikal orientiert, aber erfindungsgemäß hierauf nicht beschränkt. Sie kann selbstverständlich auch beliebig im Raum orientiert angeordnet sein. Die Drehsäule beinhaltet die Drehachse, um welche die Abdeckung drehbar gelagert ist.

Des Weiteren wird nach der Erfindung vorgesehen, dass in dem Bearbeitungsraum eine durch Indexpunkte festgelegte (bestimmte) Auflagestelle für das Werkstück vorgesehen ist und der Werkstückträger das zu bearbeitende Werkstück an der Auflagestelle ablegt. Die Indexpunkte sorgen für eine exakte Ausrichtung und Positionierung des Werkstückes in der Bearbeitungseinheit, da an dem Werkstück in der Regel hochgenaue Bearbeitungen auszuführen sind. Dabei ist die Anordnung der Indexpunkte so gewählt, dass eine Selbstausrichtung zum Beispiel durch Konusse oder ähnlichem erfolgt, wodurch günstigerweise der Aufwand für eine hochgenaue Positionierung des Werkstückes durch die erfindungsgemäß vorgeschlagene Werkstückwechseleinheit geringer gewählt werden kann, was Kosten spart.

Dabei besitzt das Werkstück entsprechende Anlagepunkte, die in geeigneter Weise mit den Indexpunkten zusammenwirken und die hochgenaue Positionierung während der Bearbeitung erreichen.

In der erfindungsgemäßen Bearbeitungseinheit ist eine Spannvorrichtung für das Spannen des Werkstückes vorgesehen. Die Spannvorrichtung hat die Aufgabe, das exakt positionierte Werkstück während des Bearbeitungsvorganges sicher und positionsgenau zu halten, wobei zu beachten ist, dass während der Bearbeitung erhebliche Bearbeitungskräfte auf das Werkstück wirken können. Für die Ausgestaltung der Spannvorrichtung sind im Stand der Technik eine Vielzahl von Lösungen bekannt. So sind zum Beispiel entsprechende Spannvorrichtungen in den Indexpunkten der Auflagestelle integriert oder aber entsprechende Befestigungsklammern ziehen den Fuß des Werkstückes nach unten. In einer erfindungsgemäßen Variante wird vorgesehen, dass im Bearbeitungsraum oberhalb des Werkstückes eine auf das Werkstück wirkende Spannvorrichtung vorgesehen ist. Dieses Konzept hat mehrere Vorteile. Zum einen stört die Spannvorrichtung nicht den Ein- oder Auswechselprozess des Werkstückes, am Werkstückfuß vorgesehene Klauen müssen entsprechend sicher wegbewegt werden, um das Werkstück aus der Auflagestelle zu entfernen. Zwar ist eine gewisse Anheb- oder Absenkbewegung, also eine vertikale Bewegung des Werkstückes vorgesehen, jedoch ist die ausreichend gering, um die von oben wirkende Spannvorrichtung in keinster Weise zu beeinträchtigen. Insbesondere muss die Spannvorrichtung nicht mit einer Greifvorrichtung, die das Werkstück von oben anliefert, platzmäßig konkurrieren, was zu entsprechendem konstruktiven Aufwand führt. Vielmehr ist es möglich, eine starr und daher mechanisch sehr stabile Spannvorrichtung zu realisieren, die von oben, zum Beispiel mit Hilfe eines Spannstempels, das Werkstück auf die Indexpunkte der Auflagestelle drückt.

In der erfindungsgemäßen Ausgestaltung ist vorgesehen, dass die Traverse sich an der Drehsäule abstützt. Konstruktiv bedingt befindet sich die Drehsäule im Symmetriezentrum der Werkstückbewegung. Bei einer Anordnung, bei welchem zwei Werkstückträger vorgesehen sind, befindet sich die Drehachse zwischen der Auflagestelle im Bearbeitungsraum und dem Aufrüstplatz außerhalb des Bearbeitungsraumes. Im Bereich der Abdeckung sind zusätzliche Abstützungen hinderlich, da durch diesen Raum die Abdeckung während des Ein- und Auswechselprozesses des Werkstückes durchzuschwenken hat. In diesem Bereich kann also eine ortsnahe Abstützung der Spannvorrichtung nicht erfolgen, es wären verhältnismäßig große Spannweiten notwendig, die zu entsprechenden Biegemomenten in den Traversen führen würden. Die Verwendung der Drehsäule als Auflage für die Traverse vermeidet diese Probleme in elegantester Weise. Die Drehsäule stellt an sich einen festen Teil des Maschinenrahmens dar, die Abdeckung ist drehbar an der Drehsäule gelagert. Die Drehsäule ist auch verhältnismäßig nah an der Auflagestelle, wodurch es sich ergibt, dass die zu überspannenden Längen sehr kurz sind, und die Drehsäule gewinnt durch diese Verwendung einen weiteren Aspekt. Die Drehsäule ist somit nicht nur während des Werkstückwechselprozesses von Bedeutung, sondern auch während der Bearbeitung, da diese dann die Spannvorrichtung abstützt. Es resultiert ein gutes statisches Konzept mit geringem Materialeinsatz. Neben dem Abstützungspunkt der Traverse an der Drehsäule stützt sich die Traverse in geeigneter Weise auf der der Abdeckung gegenüberliegenden Seite des Bearbeitungsraumes im Maschinenrahmen ab.

In einer erfindungsgemäßen Variante ist vorgesehen, dass der Werkstückträger von der Abdeckung gehalten ist. Eine solche Ausgestaltung ist einfach herstellbar, alternativ hierzu ist es möglich, dass Werkstückträger und Abdeckung unabhängig voneinander, jeweils einzeln drehbar um die Drehachse, insbesondere an der Drehsäule gelagert sind.

Wie bereits eingangs ausgeführt, sind mehrere Varianten für die Realisierung der Anheb-/Absenkvorrichtung möglich. So wird in einer erfindungsgemäßen Variante zunächst vorgesehen, dass an der Drehsäule eine Anheb-/Absenkvorrichtung für die Abdeckung vorgesehen ist. Die Anheb-/Absenkbewegung ist von dem Werkstückträger auszuführen, um das Anheben und Absetzen des Werkstückes auf seiner jeweiligen Unterlage zu bewirken. Wird eine solche Variante gewählt, so ist es günstig, dass der Werkstückträger an der Abdeckung angeordnet ist. Dabei bietet es sich an, die Anheb-/Absenkbewegung der Abdeckung zusätzlich auch für ein möglichst dichtes Maschinengehäuse zu nutzen. Mit der Absenkbewegung der Abdeckung gelangt diese in einen entsprechenden Dichtsitz und erreicht einen möglichst dichten Abschluss des Bearbeitungsraumes, in welchem oftmals auch mit Kühlflüssigkeiten usw. gearbeitet wird. Vor dem Herein- beziehungsweise Herausschwenken wird die Abdeckung mit dem Werkstückträger angehoben, um das jeweilige Werkstück anzuheben, und gleichzeitig wird auch die Abdeckung geschickterweise aus ihrer Dichtposition herausgehoben. Die Anheb- und auch die Absenkbewegung wird daher doppelt genutzt.

In einer bevorzugten Ausgestaltung der Erfindung wird eine sich nach unten (entlang der Absenkbewegung) konisch verjüngende Abdeckung vorgeschlagen. Der Effekt dieser Ausgestaltung ist der, dass bei einem vertikalen Anheben der Abdeckung, die für das Abheben des Werkstückes benötigt wird, auch die seitliche Abdichtung der Abdeckung mit den jeweiligen Dichtflächen am Maschinengehäuse freikommt und dann zerstörungsfrei eine Drehbewegung ausgeführt werden kann. In der nachfolgenden Absenkbewegung wird dann nicht nur das Werkstück auf dem Werkstückträger abgesetzt, sondern auch die Ränder der Abdeckung, die mit entsprechenden Dichtungen ausgestattet sind, dichten die Abdeckung zum Maschinengehäuse hin ab.

Alternativ hierzu ist es möglich, dass die Abdeckung eine Anheb- und Absenkvorrichtung für die Werkstückträger aufweist. In diesem Fall wird die Abdeckung selber nicht angehoben, sie trägt aber eine entsprechende Anheb-/Absenkvorrichtung. Als Anheb- oder Absenkvorrichtungen sind bekannte, zum Beispiel elektrisch, hydraulisch und pneumatisch betriebene Aktuatoren, wie Arbeitszylinder oder Stellmotoren usw. oder auch NC-Achsen vorgesehen.

In einer weiteren Ausgestaltung der Erfindung wird vorgesehen, dass die Werkstückwechseleinheit zwei, drei, vier oder mehr, je durch eine Abdeckung getrennte Werkstückträger aufweist. In der einfachsten Ausgestaltung des erfindungsgemäßen Konzeptes ist eine in der Regel ebene, plattenartige Abdeckung zwischen zwei Werkstückträgern vorgesehen. Diese Ausgestaltung ist auch in der Zeichnung gezeigt. Hieraus resultiert, dass für einen Wechsel des Werkstückes eine Rotationsbewegung von 180° notwendig ist. Das erfindungsgemäße Konzept erlaubt es aber auch, dass die Werkstückwechseleinheit drei, vier oder mehr Werkstückträger besitzt, um zum Beispiel eine karussellartige Bearbeitungseinheit zu realisieren, in welcher mehrere verschiedene Bearbeitungsmaschinen unterschiedliche Bearbeitungen an dem Werkstück ausführen. Eine solche Ausgestaltung hat den Vorteil, dass der Drehweg, das heißt der Drehwinkel zwischen den einzelnen Bearbeitungspositionen kleiner ist und daher der Transport schneller erfolgt.

Üblicherweise wird dann eine Abdeckung verhältnismäßig komplex, zum Beispiel sternartig oder gewinkelt, ausgebildet sein, um die einzelnen Werkstückträger untereinander abzugrenzen. Die einzelnen Segmente sind aber gleich groß, um insbesondere mit dem Maschinengehäuse im Zuladungsbereich eine definierte und sichere Abgrenzungswand zu ergeben, um die Bediener nicht zu gefährden. Für die Ausgestaltung des erfindungsgemäß vorgesehenen Werkstückträgers sind ebenfalls mehrere Varianten denkbar. Der an der Abdeckung oder an der Werkstückwechseleinheit angeordnete Werkstückträger ist zum Beispiel plattenartig oder tablettartig ausgebildet. Günstig hat es sich aber ergeben, wenn der Werkstückträger insbesondere gabelartig ausgebildet ist, derart, dass zwischen den Zinken des gabelartigen Werkstückträgers zum Beispiel Indexpunkte oder sonstige Auflagen, die im Bearbeitungsraum am Boden angeordnet sind, hindurchragen können, um so das hierauf abgesetzte Werkstück zu tragen.

Die Ausgestaltung des Werkstückträgers ist dabei auf eine aus zwei Zinken bestehende gabelartige Variante nicht beschränkbar; es bestehen hierzu eine Vielzahl weiterer Varianten, die zum Beispiel mit drei Zinken oder kammartig usw. realisiert sind. Da erfindungsgemäß vorgesehen ist, dass der Werkstückträger während der Bearbeitung im Bearbeitungsraum verbleibt, gehören auch Konzepte zur Erfindung, bei welchen zum Beispiel das Werkstück auf seitlich angreifende Indexpunkte aufliegt, die zum Beispiel gegen das Werkstück angestellt werden.

Es ist ein Aspekt der Erfindung, dass die Anheb- beziehungsweise Absenkbewegung der einzelnen Werkstückträger gleichzeitig für alle Werkstückträger erfolgt. Dies reduziert den entsprechenden Aufwand für die Anheb-/Absenkvorrichtung. Dies schließt natürlich eine entsprechende einzelne Ausgestaltung des Anheb-/Absenkmechanismus für die einzelnen Werkstückträger im Sinne der Erfindung nicht aus, ist aber mit etwas mehr Aufwand verbunden.

In einer bevorzugten Ausgestaltung der Erfindung ist vorgesehen, dass bei der Anhebbewegung des Werkstückträgers dieser das fertig bearbeitete Werkstück von der Auflagestelle abhebt und eine nachfolgende Drehbewegung das fertig bearbeitete Werkstück um die Drehachse aus den Bearbeitungsraum herausbewegt und ein auf dem anderen Werkstückträger aufliegendes, unbearbeitetes Werkstück in den Bearbeitungsraum hineinbewegt, welches durch die nachfolgende Absenkbewegung des Werkstückträgers auf die Auflagestelle gelangt. Der erfindungsgemäße Ablauf des Werkstückwechselprozesses erfolgt sehr schnell und trägt zu einer Erhöhung der Effizienz der erfindungsgemäßen Bearbeitungseinheit bei. Ein Vorzug der Erfindung liegt insbesondere darin, dass der Werkstückträger jederzeit unterhalb des jeweiligen Werkstückes angeordnet ist und insbesondere während der Bearbeitung nicht aus dem Bearbeitungsraum herauszubewegen ist, wodurch der erhebliche Geschwindigkeitsvorteil erreicht wird.

Des Weiteren zeichnet sich die Erfindung dadurch aus, dass bei der Anhebbewegung des Werkstückträgers dieser ein neu zu bearbeitendes Werkstück von einem außerhalb des Bearbeitungsraumes vorgesehenen Transportmittel abhebt. Die Erfindung stellt gleichzeitig nicht nur eine erhebliche Reduktion der Werkstückwechselzeiten zur Verfügung, sondern ist in einfacher Weise auch anderen Bearbeitungseinheiten, zum Beispiel als Teil einer Bearbeitungslinie usw. mit entsprechenden Transportmitteln verkettbar. Die Erfindung ist daher problemlos sowohl in Transferstraßen oder in Bearbeitungslinien einsetzbar, wie auch bei einzeln stehenden Bearbeitungseinheiten, bei welchen das Werkstück zum Beispiel händisch auf dem außen angeordneten Werkstückträger aufgelegt wird.

Eine vorteilhafte Weiterbildung der erfindungsgemäßen Bearbeitungseinheit sieht vor, dass das Bearbeitungswerkzeug relativ zum Werkstück beweglich angeordnet ist. Hierzu ist vorgesehen, dass das Bearbeitungswerkzeug durch den Drehkreis des Werkstückträgers verfahrbar ist. Durch diese Ausgestaltung der Bearbeitungseinheit wird eine noch weiter vereinfachte Bearbeitungsmöglichkeit für das Werkstück geschaffen. Anstatt der eingangs bereits als umständlich und langwierig beschriebenen Verfahrung von Träger- oder Greifwerkzeugen wird hier nur eine relativ kurze Wegstrecke durch die Bearbeitungswerkzeuge zurückgelegt, sodass diese besonders schnell aus der Bearbeitungsposition verbracht werden können. Dies kann unmittelbar vor dem Verschwenken oder Verdrehen des Werkstückträgers erfolgen. Dadurch dass das Bearbeitungswerkzeug durch den Drehkreis des Werkstückträgers verfahren wird, bedarf es keiner weiteren Hebe- oder Bewegungsvorrichtungen für das Werkzeug. Durch diese Ausführungsform der erfindungsgemäßen Bearbeitungseinheit wird aber dennoch vermieden, dass es zu einer Kollision zwischen den Bearbeitungswerkzeugen und dem Werkstück beziehungsweise dem Werkstückträger kommt. Vor oder nach der Bearbeitung werden die Bearbeitungswerkzeuge zunächst in eine Ruheposition außerhalb des Schwenk- oder Drehkreises des Werkstückträgers verbracht und nach dem Ablegen des Werkstückes auf beispielsweise eine Auflagestelle vor einer Bearbeitungseinheit an das Werkstück verfahren beziehungsweise auf dieses zubewegt.

In einer Grundausführung der Bearbeitungseinheit ist vorgesehen, dass lediglich ein Bearbeitungswerkzeug vorhanden ist. Eine vorteilhafte Weiterbildung der Bearbeitungseinheit der vorliegenden Erfindung sieht vor, dass zwei oder mehrere Bearbeitungswerkzeuge angeordnet sind. Diese Weiterbildung der Bearbeitungseinheit ermöglicht beispielsweise ein mehrseitiges Bearbeiten des Werkstückes oder eine Bearbeitung mit verschiedenen Werkzeugen nacheinander oder gleichzeitig.

Als günstig wird angesehen, wenn die Bearbeitungswerkzeuge, besonders sofern zwei oder mehr davon verwendet werden, unabhängig voneinander relativ zum Werkstück verfahrbar ausgebildet sind. Der Bearbeitungsvorgang wird durch diese Ausführungsform der Bearbeitungseinheit weiter verkürzt und die Effizienz der Einheit somit wesentlich verbessert. Um eine Bearbeitung der Ober- und Unterseite des Werkstückes durchführen zu können, sieht eine Weiterbildung der Erfindung vor, dass die Bearbeitungswerkzeuge beziehungsweise das Bearbeitungswerkzeug relativ zum Werkstück verschwenkbar ausgebildet ist/sind. Je nach Auflagestelle für das Werkstück beziehungsweise deren Ausführung oder auch nach dem während der Bearbeitung im Bearbeitungsraum verbleibenden Werkstückträger wird es so möglich, dass das Bearbeitungswerkzeug von unten oder von oben an das Werkstück herangeführt wird, um hier Bearbeitungen durchführen zu können. Neben einer ober- oder unterseitigen Bearbeitung des Werkstückes wird durch die gegebene Verschwenkbarkeit des Bearbeitungswerkzeuges ebenfalls eine mehrseitige Bearbeitung des Werkstückes begünstigt. Darüber hinaus kann dadurch dass gegebenenfalls nur ein Bearbeitungswerkzeug für mehrere Seiten des Werkstückes vorgesehen werden muss, der Aufbau der Bearbeitungseinheit wesentlich vereinfacht und damit auch die Herstellungskosten für die Bearbeitungseinheit wesentlich gesenkt werden.

Bedingt durch die Tatsache, dass der Werkstückträger allein durch die Drehbewegung der Drehachse der Bearbeitungseinheit an eine Auflagestelle beziehungsweise eine Bearbeitungsposition im Bereich der Bearbeitungseinheit bringbar ist, ergibt sich, dass keine weitere Hinführung zu einem Bearbeitungswerkzeug vorgesehen ist. Aufgrund dessen wird es als vorteilhaft angesehen, wenn zur zügigen und genauen Bearbeitung des Werkstückes das Bearbeitungswerkzeug oder dessen Träger insgesamt drei Freiheitsgrade der Bewegung aufweist. Dies bedeutet, neben einer Verfahrbarkeit in X- und Y-Richtung ist auch vorgesehen, dass das Bearbeitungswerkzeug in Z-Richtung, und damit auf das Werkstück zu, verfahrbar ist. Die entsprechende Verfahrbarkeit des Bearbeitungswerkzeuges wird über zusätzliche Spindeltriebe, die am Bearbeitungswerkzeug beziehungsweise einem dafür vorgesehenen Halter angreifen, erreicht. Eine Steuerung der verschiedenen Antriebe erfolgt hierbei durch ein Steuerungsprogramm beziehungsweise mit einer entsprechenden Software, die für die Bearbeitungseinheit vorgesehen ist.

Die Erfindung umfasst sowohl vorrichtungsgemäße wie auch verfahrensgemäße Aspekte. Die Erfindung betrifft daher auch ein Verfahren für das Durchführen eines Werkstückwechselprozesses, in welchem bei der Anhebbewegung des Werkstückträgers dieser das fertig bearbeitete Werkstück von der Auflagestelle abhebt. Durch den Werkstückträger wird durch eine nachfolgende Drehbewegung das fertig bearbeitete Werkstück um eine Drehachse aus dem Bearbeitungsraum herausbewegt. Ein auf dem anderen Werkstückträger aufliegendes, unbearbeitetes Werkstück wird in den Bearbeitungsraum hineinbewegt und durch die nachfolgende Absenkbewegung des Werkstückträgers auf die Auflagestelle abgelegt.

In der Zeichnung ist die Erfindung schematisch dargestellt. Es zeigen:
- Fig. 1: eine Draufsicht auf die erfin- dungsgemäße Bearbeitungseinheit und
- Fig. 2: einen vertikalen Schnitt durch eine erfindungsgemäße Bearbei- tungseinheit;

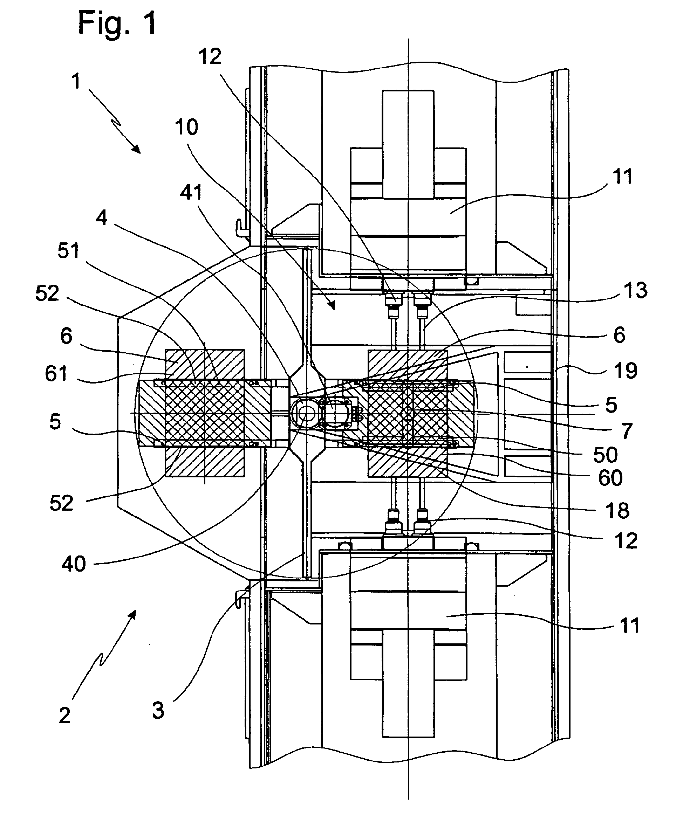

In Fig. 1 ist die erfindungsgemäße Bearbeitungseinheit 1 schematisch in einer Draufsicht gezeigt. Die Bearbeitungseinheit 1 besteht aus zwei gegeneinander gestellte Bearbeitungsmaschinen 11, die jeweils in dem hier gezeigten Ausführungsbeispiel zwei Arbeitsspindeln 12 aufweisen. Die Arbeitsspindeln 12 treiben rotierend Bearbeitungswerkzeuge 13 an. Der Bearbeitungsraum 10 erstreckt sich zwischen den beiden Bearbeitungsmaschinen 11 und nimmt das Werkstück 6 auf. Aus Sicherheits- und Schmutzgründen ist der Bearbeitungsraum 10 insbesondere während der Bearbeitungszeiten der Bearbeitungseinheit 1 möglichst dicht verschlossen. Hierzu ist eine entsprechende Umhausung, die nicht weiter beschrieben ist, vorgesehen. Teil dieser Umhausung ist die Abdeckung 3, die auch Teil der erfindungsgemäß vorgeschlagenen Werkstückwechseleinheit 2 ist.

In dem hier gezeigten Ausführungsbeispiel der Erfindung befindet sich das Werkstück 60 innen im Bearbeitungsraum zwischen den beiden Bearbeitungsmaschinen 11, insbesondere zwischen den beiden jeweils von den Arbeitsspindeln 12 angetriebenen Bearbeitungswerkzeugen. Diese gleichzeitige, mehrseitige Bearbeitung ist ein Aspekt der Erfindung. Die Erfindung ist aber in gleicher Weise auch bei einfacheren Bearbeitungseinheiten 1 realisierbar, nämlich die nur an einer Seite eine Bearbeitungsmaschine 11 aufweisen, die auf das Werkstück 6 einwirken.

Ebenfalls möglich ist, dass die Bearbeitungsmaschinen 11 axial zu den Arbeitsspindeln 12 verfahrbar sind. Nach Abschluss der Bearbeitung des Werkstückes 60 werden die Bearbeitungsmaschinen 11 vom Werkstück 60 weg verfahren und verlassen dabei den Drehkreisbereich des Werkstückträgers 5. Beim Verwenden von verfahrbaren Arbeitsmaschinen 11, wobei es selbstverständlich auch möglich ist, dass nur die Bearbeitungswerkzeuge 13 verfahren werden, kann auf ein Absetzen des Werkstückes 60 im Bearbeitungsraum verzichtet werden, da die Bearbeitungswerkzeuge 13 erst nach der Positionierung des Werkstückes 60 auf dieses zubewegt werden, um es zu bearbeiten. Neben dieser Bewegung der Bearbeitungswerkzeuge 13, beziehungsweise Bearbeitungsmaschinen 11 in Z-Richtung, können diese auch in X- und Y-Richtung verfahrbar ausgebildet sein, sodass mehrere Positionen auf der den Bearbeitungswerkzeugen 13 zugewandten Seiten des Werkstückes 60 in einem Arbeitsgang bearbeitet werden können.

Um ein außen vorgelegtes Werkstück 61 für eine Bearbeitung durch die Bearbeitungseinheit 1 in den Bearbeitungsraum 10 zu bringen, ist die Werkstückwechseleinheit 2 vorgesehen. Sie besitzt eine in dem Ausführungsbeispiel vertikal angeordnete Abdeckung 3, die um die Drehachse 40 drehbar ausgebildet ist. Die zu transportierenden Werkstücke 6 werden von Werkstückträgern 5 getragen. Die Werkstückträger 5 sind zum Beispiel gabelartig ausgebildet und besitzen zwei zueinander jeweils beabstandete Zinken 52.

Der auf der Innenseite eingesetzte Werkstückträger 50, wie auch der auf der Außenseite angeordnete Werkstückträger 51 sind im Wesentlichen gleichartig ausgebildet, was insbesondere das Absenken und Anheben des jeweiligen davon gehaltenen Werkstückes erheblich erleichtert, weil dann die Verhältnisse jeweils gleich sind.

Die Drehachse 40 ist realisiert in einer Drehsäule 4. Die Drehsäule 4 ist geschickterweise Teil des Maschinenrahmens 19 und trägt zu dessen Statik bei. Für eine Drehbewegung der Abdeckung 3 ist ein Drehantrieb 41 vorgesehen, der an der Drehsäule, oberhalb des Bearbeitungsraumes an der Bearbeitungseinheit vorgesehen ist. Dies ist in einfacher Weise zum Beispiel ein Elektromotor, dessen Steuerung mit der Maschinensteuerung der Bearbeitungseinheit zusammenwirkt, um zum richtigen Zeitpunkt die Drehbewegung auszuführen.

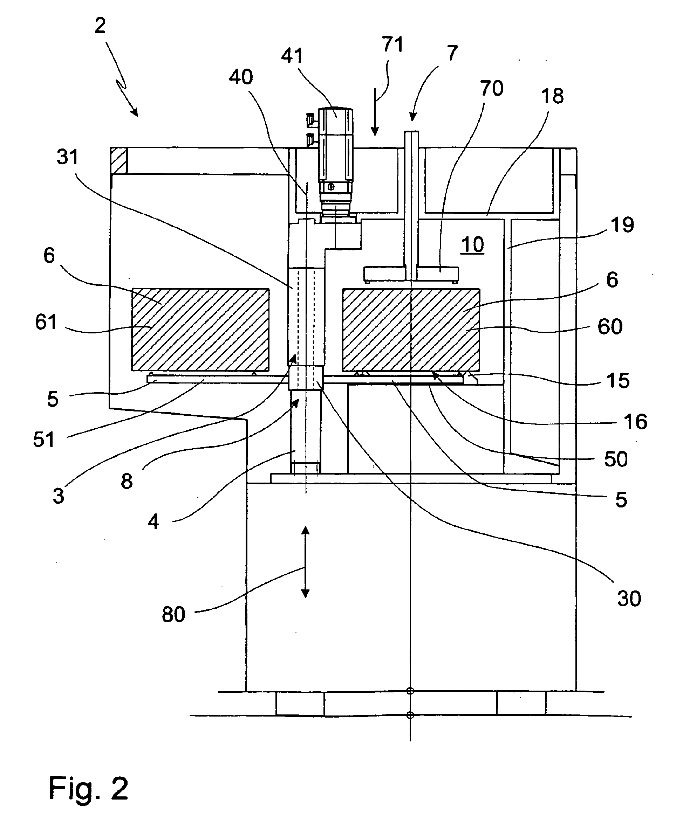

In Fig. 2 ist die erfindungsgemäße Bearbeitungseinheit mit ihrer Werkstückwechseleinheit 2 in einer Schnittdarstellung gezeigt. Die Schnittebene ist auf Höhe der Drehachse 40 angeordnet, weswegen die Abdeckung 3 verdeckt, gestrichelt gezeigt ist. Die Abdeckung 3 schwenkt mit den beiden Werkstückträgern 5 die Drehachse 40.

Die Werkstückträger 5, 50, 51 sind an der Abdeckung 3 fest angeschlossen, somit wirkt die von dem Drehantrieb 41 auf die Abdeckung 3 ausgeführte Drehbewegung auch auf die Werkstückträger 5.

Es ist eine Anheb-/Absenkvorrichtung 8 zum Beispiel unterhalb der Abdeckung 3 an der Drehsäule 4 vorgesehen, um eine vertikal gerichtete Anheb- und Absenkbewegung 80 der gesamten Abdeckung 3 und somit auch der damit verbundenen Werkstückträger 5, 50, 51 zu bewirken.

Die Erfindung ist dabei bezüglich der Ausgestaltung der Abdeckung 3 in mehreren Varianten realisierbar. In einer ersten Variante ist die Abdeckung 3 einstückig ausgebildet, und die Anheb-/Absenkvorrichtung 8 bewegt die gesamte Abdeckung 3.

In einer zweiten Variante ist die Abdeckung 3 in mehrere Teile unterteilt, in Fig. 2 sind hierzu ein unteres Abdeckungsteil 30 und ein oberes Abdeckungsteil 31 vorgesehen. In dem hier gezeigten erfindungsgemäßen Ausführungsbeispiel wird dabei nur das untere Abdeckungsteil 30 vertikal angehoben beziehungsweise abgesenkt, und natürlich um die Drehachse 40 gedreht. An diesem ist auch der Werkstückträger 5 angeordnet. Das obere Abdeckungsteil 31 bleibt in seiner gleichen vertikalen Höhenlage und wird, gleichzeitig mit dem unteren Abdeckungsteil 30, um die Drehachse 40 geschwenkt. Eine solche Ausgestaltung hat den Vorteil, dass im oberen Bereich der Abdeckung 3 (am oberen Rand des oberen Abdeckungsteils 31), keine Probleme bestehen im Hinblick auf Dichtigkeit oder Platz, der für einen Ausgleich der Vertikalbewegung vorgesehen werden muss. Dabei sind die beiden Abdeckungsteile 30, 31 teleskopartig ineinander angeordnet, derartig, dass das untere Abdeckungsteil 30 in beiden Stellungen der Werkstückwechseleinheit in der vertikalen Aufwärtsbewegung hinter dem rohrartigen, auf der Drehsäule 4 angeordneten Führungsteil des oberen Abdeckungsteils 31 eintaucht. An der Innenwand des Bearbeitungsraumes 10 abtropfende Kühlflüssigkeit gelangt über diese Anordnung nicht nach außen. Das untere Abdeckungsteil besitzt eine Höhe von ca. 1/5 der Gesamthöhe der Abdeckung 3, diese kann variabel von 1/8 bis 1/2 der Gesamthöhe der Abdeckung gewählt werden.

Die Anheb-/Absenkvorrichtung 8 ist zum Beispiel als hydraulisch oder pneumatisch betriebenes Stellelement, Arbeitszylinder oder Elektromotor oder ähnliches ausgebildet.

Im Bearbeitungsraum 10 liegt das Werkstück 60 auf Indexpunkten 15 der Auflagestelle 16 positionsgenau auf. Oberhalb des Werkstückes 60 ist eine Spannvorrichtung 7 für das Werkstück 6, 60 vorgesehen, dessen Spannstempel 70 in der Spannstellung nach unten (Pfeil 71) bewegt und gerichtet wird, um das Werkstück 60 ausreichend fest und positionsgenau auf den Indexpunkten 15 während der Bearbeitung zu halten.

Die Spannvorrichtung 7 ist angeordnet an einer den Bearbeitungsraum 10 überspannenden Traverse 18.

Wie in Fig. 1 gezeigt, ist die Traverse 18 zum Beispiel als Gitterrohrstruktur ausgebildet und trapezförmig realisiert, derart, dass sich die Traverse 18 an der Drehsäule 4 abstützt. Auf die mechanischen Vorteile, insbesondere im Hinblick auf die Stabilität aber auch auf die Realisierung der gesamten Anordnung wurde bereits hingewiesen.

Die Traverse 18 ist mit dem übrigen Maschinenrahmen fest verbunden beziehungsweise die Drehsäule 4, wie auch die Traverse 18 sind Teil des Maschinenrahmens 19.

Der Ablauf für das Be- beziehungsweise Entladen der Werkstücke beziehungsweise der Werkstückwechsel ist wie folgt.

Ausgehend von der in Fig. 2 gezeigten Stellung wird zunächst die Spannvorrichtung 7 entspannt und entgegen der Spannrichtung 71 der Spannstempel 70 nach oben bewegt. Dadurch kommt das innenliegende Werkstück 60 aus seiner Spannstellung frei.

Es wird dann die Abdeckung 3 durch die Anheb-/Absenkvorrichtung 8 angehoben (Pfeil 80), wodurch auch der im Moment innenliegende Werkstückträger 50 ankommt und beginnt das Werkstück 60 zu tragen. Bei weiterer Bewegung des Werkstückträgers 50 hebt dieser das Werkstück 60 aus den Indexpunkten 15 heraus, das heißt das Werkstück wird für eine horizontale Drehbewegung frei. Ist dieser Zeitpunkt erreicht, so wird die Anhebbewegung gestoppt und es erfolgt eine Rotationsbewegung der Abdeckung mit den daran angebundenen Werkstückträgern um die vertikal orientierte Drehachse 40. Hierzu wird der Drehantrieb 41 aktiviert. Gleichzeitig, in welchem der zunächst innenliegende Werkstück 60 heraustransportiert wird, wird ein auf dem äußeren Werkstückträger 51 vorbereitetes Werkstück 61 hereintransportiert.

Die beiden Werkstücke 60, 61 wechseln ihre Position. Liegt das hereintransportierte Werkstück 6 in geeigneter Weise über den Indexpunkten 15 wird die Drehbewegung angehalten und es erfolgt dann eine Absenkbewegung der Anheb-/Absenkvorrichtung 8, derart, dass der jetzt hereingeschwenkte Werkstückträger 5 das nun zu bearbeitende Werkstück 6 auf die Indexpunkte 15 absetzt. Zu diesem Zeitpunkt ist bereits die zunächst geöffnete Abdeckung 3 wieder so angeordnet, dass der gesamte Bearbeitungsraum 10 geschlossen ist.

Der Werkstückträger 5 verbleibt sogleich unterhalb des Werkstückes, der spannstempel 70 fährt nach unten (Pfeil 71) und presst das jetzt zur Bearbeitung fertig positionierte werkstück 6 auf die Indexpunkte 15.

## Patentansprüche

1. Bearbeitungseinheit (1) mit einer Werkstückwechseleinheit (2), wobei die Werkstückwechseleinheit (2) eine um eine Drehachse (40) drehbare, den Bearbeitungsraum (10) der Bearbeitungseinheit (1) für Werkstückwechselvorgänge öffnende und schließende Abdeckung (3) aufweist und die Werkstückwechseleinheit (2) zumindest zwei durch die Abdeckung (3) getrennte, anheb- oder absenkbare um die Drehachse (40) drehbare Werkstückträger (5, 50, 51) aufweist, welche je zumindest ein Werkstück (6, 60, 61) zu tragen vermögen und ein Werkstückträger (50) während der Bearbeitung durch die Bearbeitungseinheit (1) im Bearbeltungsraum (10) verbleibt, wobei eine Rotationsbewegung der Abdeckung (3) um die Drehachse (40) mit den Werkstückträgern (5, 50, 51) vorgesehen ist, **dadurch gekennzeichnet, dass** im Bearbeitungsraum (10) eine auf das Werkstück (6) wirkende Spannvorrichtung (7) vorgesehen ist, wobei die Spannvorrichtung (7) an einer, den Bearbeitungsraum (10) überspannenden, sich an einer Drehsäule (4) abstützenden Traverse (18) angeordnet ist, wobei die Drehsäule (4) die Drehachse (40) beinhaltet.

2. Bearbeitungseinheit (1) nach Anspruch 1, **dadurch** gekenzeichnet, dass die Spannvorrichtung (7) als Spannstempel ausgebildet ist.

3. Bearbeitungseinheit (1) nach Anspruch 1 oder 2, **dadurch** gekennzeichnen, dass der Werkstückträger (5) das Werkstück (6) direkt, ohne Traglatte oder ähnlichem trägt.

4. Bearbeitungseinheit (1) nach einem der vorhergehenden Ansprüche, **dadurch gekennzeichnet, dass** die Abdeckung (3) um die Drehsäule (4) drehbar gelagert ist und/oder an der eine Anheb-/Absenkvorrichtung für die Abdeckung vorgesehen ist.

5. Bearbeitungseinheit (1) nach einem vorhergehenden Ansprüche, **dadurch gekennzeichnet, dass** in dem Bearbeitungsraum (10) eine durch Indexpunkte (15) festgelegte Auflagestelle (16) für das Werkstück (6) vorgesehen ist und der Werkstückträgern (5) das zu bearbeitende Werkstück (6) an der Auflagestelle (16) ablegt.

6. Bearbeitungseinheit (1) nach einem der vorhergehenden Ansprüche, **dadurch** gekenntzeichnet, dass die auf das Werkstück (6) wirkende spannvorrichtung (7) oberhalb des Werkstückes (6) im Bearbeitungsraum (10) angeordnet ist.

7. Bearbeitungseinheit (1) nach einem der vorhergehenden Ansprüche, **dadurch gekennzeichnet, dass** der Werkstückträger (5) von der Abdeckung (3) gehalten ist.

8. Bearbeitungseinheit (1) nach einem der vorhergehenden Ansprüche, **dadurch gekennzeichnet, dass** die Abdeckung (3) eine Anheb-/Absenkvorrichtung für die Werkstückträger (5) aufweist.

9. Bearbeitungseinheit (1) nach einem der vorhergehenden Ansprüche, **dadurch gekennzeichnet, dass** die Werkstückwechseleinheit (2) zwei, drei, vier oder mehr je durch eine Abdeckung (3) getrennte Werkstückträger (5) aufweist.

10. Bearbeitungseinheit (1) nach einem der vorhergehenden Ansprüche, **dadurch gekennzeichnet, dass** der Werkstückträgern (5) gabelartig ausgebildet ist.

11. Bearbeitungseinheit (1) nach einem der vorhergehenden Ansprüche, **dadurch gekennzeichnet, dass** bei der Anhebbewegung des Werkstückträgers (5) dieser das fertig bearbeitete Werkstück (60) von der Auflagestelle (16) abhebt und eine nachfolgende Drehbewegung das fertig bearbeitete Werkstück (60) um die Drehachse (40) aus den Bearbeitungsraum (10) herausbewegt und ein auf dem anderen Werkstückträger (5, 51) aufliegendes, unbearbeitetes Werkstück (6, 61) in den Bearbeitungsraum (10) hereinbewegt, welches durch die nachfolgende Absenkbewegung des Werkstückträgers (5) auf die Auflagestelle (16) gelangt.

12. Bearbeitungseinheit (1) nach einem der vorhergehenden Ansprüche, **dadurch gekennzeichnet, dass** bei der Anhebbewegung des Werkstückträgers (5) dieser ein neu zu bearbeitendes Werkstück (61) von einer außerhalb des Bearbeitungsraumes (10) vorgesehenen Transportmittel abhebt.

13. Bearbeitungseinheit (1) nach einem der vorhergehenden Ansprüche, **dadurch gekennzeichnet, dass** ein Bearbeitungswerkzeug (13) relativ zum Werkstück (6) beweglich angeordnet ist, wobei das Bearbeitungswerkzeug (13) durch den Drehkreis des Werkstückträgers (5) verfahrbar ist und/oder drei Freiheitsgrade der Bewegung aufweist.

14. Bearbeitungseinheit (1) nach einem der vorhergehenden Ansprüche, **dadurch** gekennzeichet, dass zwei oder mehr unabhängig voneinander relativ zum Werkstück (6) verfahrbar und/oder verschwenkbar ausgebildete Bearbeitungswerkzeuge (13) vorgesehen sind.

## Claims

1. Machining unit (1) with a work piece changing unit (2), wherein the work piece changing unit (2) has a cover (3) that rotates around a rotational axis (40) and opens and closes the machining chamber (10) of the machining unit (1) for work piece changing operations, and the work piece changing unit (2) has at least two work piece carriers (5, 50, 51) that are separated by the cover (3) and can be lifted and lowered and rotate around the rotational axis (40) and that can carry at least one work piece (6, 60, 61) each, and a work piece carrier (50) remains during machining by the machining unit (1) in the machining chamber (10), wherein a rotational movement of the cover (3) around the rotational axis (40) with the work piece carriers (5, 50, 51) is provided, **characterized in that** in the machining chamber (10) a clamping device (7) acting on the work piece (6) is provided, wherein the clamping device (7) is arranged on a traverse (18) supported on a rotatable column (4) and spanning the machining chamber (10), wherein the rotatable column (4) comprises the rotational axis (40).

2. Machining unit (1) according to claim 1, **characterized in that** the clamping device (7) is configured as clamping punch.

3. Machining unit (1) according to claim 1 or 2, **characterized in that** the work piece carrier (5) carries the work piece (6) directly, without supporting plate or the like.

4. Machining unit (1) according to one of the preceding claims, **characterized in that** the cover (3) is supported rotating around the rotatable column (4), and/or on which a lifting/lowering device is provided for the cover.

5. Machining unit (1) according to one of the preceding claims, **characterized in that** in the machining chamber (10) a supporting area (16) determined by index points (15) for the work piece (6) is provided, and the work piece carrier (5) deposits the work piece (6) to be machined at the support area (16).

6. Machining unit (1) according to one of the preceding claims, **characterized in that** the clamping device (7) acting on the work piece (6) is arranged above the work piece (6) in the machining chamber (10).

7. Machining unit (1) according to one of the preceding claims, **characterized in that** the work piece carrier (5) is held by the cover (3).

8. Machining unit (1) according to one of the preceding claims, **characterized in that** the cover (3) has a lifting/lowering device for the work piece carrier (5).

9. Machining unit (1) according to one of the preceding claims, **characterized in that** the work piece changing unit (2) has two, three, four or more work piece carriers (5) each separated by a cover (3).

10. Machining unit (1) according to one of the preceding claims, **characterized in that** the work piece carrier (5) is designed fork-like.

11. Machining unit (1) according to one of the preceding claims, **characterized in that** during the lifting movement of the work piece carrier (5) it lifts the finished work piece (60) from the supporting area (16), and a following rotational movement moves the finished work piece (60) around the rotational axis (40) out of the machining chamber (10), and moves a non-machined work piece (6, 61) supported on the other work piece carrier (5, 51) into the machining chamber (10) that gets through the following lowering movement of the work piece carrier (5) on the supporting area (16).

12. Machining unit (1) according to one of the preceding claims, **characterized in that** during the lifting movement of the work piece carrier (5) it lifts a work piece (61) that has to be machined from a conveying means outside the machining chamber (10).

13. Machining unit (1) according to one of the preceding claims, **characterized in that** a machining tool (13) is arranged moving relatively to the work piece (6), wherein the machining tool (13) can be shifted through the turning circle of the work piece carrier (5), and/or has three degrees of freedom.

14. Machining unit (1) according to one of the preceding claims, **characterized in that** two or more machining tools (13) are provided that can be shifted and/or swiveled independently from each other relatively to the work piece (6).

## Revendications

1. Unité d'usinage (1) comportant une unité d'échange de pièces à usiner (2) permettant l'échange des pièces à usiner et consistant en un élément de séparation (3) pivotant autour d'un axe de rotation (40), fermant et ouvrant l'espace d'usinage (10) de l'unité d'usinage (1), et également en au moins deux supports de pièces à usiner (5, 50, 51) supportant chacun au moins une pièce à usiner (6, 60, 61), séparés par l'élément de séparation (3), pivotant autour de l'axe de rotation (40) en même temps que l'élément de séparation (3) et pouvant être soulevés, voire enlevés, et restant dans l'espace d'usinage (10) pendant l'usinage par l'unité d'usinage (1), **caractérisée en ce qu'**un dispositif de serrage (7) est situé à l'intérieur de l'espace d'usinage (10) et agit sur la pièce à usiner (6) et **en ce que** le dispositif de serrage (7) est situé au niveau d'une traverse (18) enjambant l'espace d'usinage (10) et incluant une colonne de pivotement (4) ainsi que l'axe de rotation (40).

2. Unité d'usinage (1) selon la revendication 1, **caractérisée en ce que** le dispositif de serrage (7) possède une forme de tampon.

3. Unité d'usinage (1) selon les revendications 1 ou 2, **caractérisée en ce que** le support de pièces à usiner (5) supporte directement la pièce à usiner (6) sans plaque de support ni de dispositif similaire.

4. Unité d'usinage (1) selon une des revendications précédentes, **caractérisée en ce que** l'élément de séparation (3) est maintenu de fagon pivotante autour de la colonne de pivotement (4) et/ou **en ce qu'**il existe un dispositif de soulèvement ou d'abaissement de l'élément de séparation.

5. Unité d'usinage (1) selon une des revendications précédentes, **caractérisée en ce qu'**il existe à l'intérieur de l'espace d'usinage (10) un appui (16) pour la pièce à usiner (6) référencé par des points d'indexation (15) et **en ce que** le support (5) dépose la pièce à usiner (6) sur l'appui (16).

6. Unité d'usinage (1) selon une des revendications précédentes, **caractérisée en ce que** le dispositif de serrage (7) maintenant la pièce à usiner (6) est situé à l'intérieur de l'espace d'usinage (10) au-dessus de la pièce à usiner (6).

7. Unité d'usinage (1) selon une des revendications précédentes, **caractérisée en ce que** le support de pièces à usiner (5) est maintenu par l'élément de séparation (3).

8. Unité d'usinage (1) selon une des revendications précédentes, **caractérisée en ce que** l'élément de séparation (3) comporte un dispositif de soulèvement ou d'abaissement du support de pièces à usiner (5).

9. Unité d'usinage (1) selon une des revendications précédentes, **caractérisée en ce que** l'unité d'échange de pièces à usiner (2) comporte deux, trois, quatre ou plus que quatre supports de pièces à usiner (5), chacun séparé de l'autre par l'élément de séparation (3).

10. Unité d'usinage (1) selon une des revendications précédentes, **caractérisée en ce que** le support de pièces à usiner (5) possède une forme de fourche.

11. Unité d'usinage (1) selon une des revendications précédentes, **caractérisée en ce que** le support de pièces à usiner (5) soulève pendant le mouvement de soulèvement la pièce usinée (60) de l'appui (16) puis la déplace par un mouvement de rotation autour de l'axe de rotation (40) en dehors de l'espace d'usinage (10) pendant qu'une autre pièce en attente d'usinageâ (6, 61) et située sur l'autre support de pièces à usiner (5, 51) est pivotée vers l'intérieur de l'espace d'usinage (10) puis posée sur l'appui (16) par le mouvement suivant d'abaissement du support de pièces à usiner (5).

12. Unité d'usinage (1) selon une des revendications précédentes, **caractérisée en ce que** le mouvement de soulèvement du support de pièces à usiner (5) lui permet d'enlever une nouvelle pièce à usiner (61) d'un moyen de transport situé à l'extérieur de l'espace d'usinage (10).

13. Unité d'usinage (1) selon une des revendications précédentes, **caractérisée en ce qu'**un outil d'usinage (13) mobile par rapport à la pièce à usiner (6) peut être déplacé à travers le cercle décrit par le pivotement du support de pièces à usiner (5) et/ou **en ce que** l'outil d'usinage (13) possède une mobilité dans trois directions indépendantes.

14. Unité d'usinage (1) selon une des revendications précédentes, **caractérisée en ce qu'**il existe deux ou plus de deux outils d'usinage (13) pouvant être déplacés linéairement de fagon indépendante et/ou pivotés par rapport à la pièce à usiner (6).
